Europäisches Patentamt

European Patent Office

Office européen des brevets

(19)

(11) Veröffentlichungsnummer: **0 111 646**

**A1**

(12) **EUROPÄISCHE PATENTANMELDUNG**

(21) Anmeldenummer: 83109370.3

(22) Anmeldetag: 21.09.83

(51) Int. Cl.³: **C 02 F 1/14**
**C 02 F 1/04**

(30) Priorität: 18.11.82 DE 3242581

(43) Veröffentlichungstag der Anmeldung:
27.06.84 Patentblatt 84/26

(84) Benannte Vertragsstaaten:
AT BE CH DE FR GB IT LI LU NL SE

(71) Anmelder: Tavares, Joaquim, Dipl.-Math.
Horner Weg 33
D-2000 Hamburg 26(DE)

(72) Erfinder: Tavares, Joaquim, Dipl.-Math.
Horner Weg 33
D-2000 Hamburg 26(DE)

(74) Vertreter: von Raffay, Vincenz, Dipl.-Ing. et al,
Patentanwälte Raffay, Fleck & Partner Postfach 32 32 17
D-2000 Hamburg 13(DE)

(54) Entsalzungsanlage für Meerwasser und dergleichen.

(57) Die vorliegende Erfindung betrifft eine Entsalzungsanlage für Meerwasser und dergleichen zur Erzeugung von
Wasser zum Trinken oder künstlichem Bewässern unter
Ausnutzung von Sonnenenergie. Bei bekannten Anlagen
macht sich einerseits der hohe Wartungs- und Energiebedarf
und andererseits die ungünstige Durchsatzleistung bemerkbar. Die Erfindung schafft hier Abhilfe, indem in einer
Entsalzungsanlage die Verdunstungseinheiten eine Vielzahl
von kugelförmigen Verdunstungselementen aufweisen, die
durch ihre Form und Materialbeschaffenheit die Bildung von
Salzrückstände verhindern und andererseits eine optimale
Verweilzeit des Salzwassers gewährleistet. Ein als Dach
fungierende sägeblattförmiger Sonnenkollektor und ein
künstlicher See als Sonnenwärmespeicher ermöglichen in
optimaler Weise eine Ausnutzung der Sonnenenergie bei
geringer Erstellungskosten. Zum Antrieb der Pumpen und
des Verdichters kann ggf. Windenergie verwendet werden.

EP 0 111 646 A1

Fig. 3

Die vorliegende Erfindung betrifft eine Entsalzungsanlage für Meerwasser und dergleichen zur Erzeugung von Wasser zum Trinken oder künstlichem Bewässern nach dem Oberbegriff des Hauptanspruchs.

Eine derartige Entsalzungsanlage ist beispielsweise in der DE-OS 25 00 807 beschrieben worden. Schon die dortige Lehre hatte eine wirtschaftliche, wartungsfreie und dauerleistungsfähige Entsalzungsanlage und Verfahren vorgeschlagen, das in regenarmen und sonnenreichen Gebieten in Küstennähe Einsatz finden soll. Auch wird nach der vorbekannten Lehre schon davon ausgegangen, ebenfalls Windenergien auszunutzen.

Nachteilig hat sich jedoch bei der bekannte Entsalzungsanlage bemerkbar gemacht, daß nur eine äußerst geringe Verdunstungsfläche zur Verfügung steht. Ferner ist auch der Sonneneinstrahlungswinkel unzureichend berücksichtigt geblieben, ebenso wie die Relation zwischen der relativen Luftfeuchtigkeit und der Wärmeabsorbtionskapazität der Anlage. Außerdem ist der Stand der Technik davon ausgegangen, daß Meerwasser mit ca. 30° C in die Anlage eingespeist wird, so daß die Sonnenenergie nur für den im Durchsatz befindlichen Teil des Meerwassers zur Erwärmung verwendet wird.

Im übrigen läßt die Tatsache, daß in vielen Ländern der dritten Welt das Hauptproblem - die Wasserversorgung - noch immer ungelöst ist, auf gravierende Unzulänglichkeiten der bestehenden Verfahren und Anlagen schließen. Hierzu gehören u.a. bei den meisten Systemen die hohen Betriebskosten und das Erfordernis der intensiven Wartung sowie der ständige Einsatz von technisch geschultem Personal. Auch ist bei derartigen Anlagen der Strom-Energieverbrauch besonders hoch.

Der vorliegenden Erfindung liegt deshalb die Aufgabe zugrunde, die eingangs genannte Anlage derart zu verbessern, daß mit ihr die oben geschilderten Nachteile vermieden können und eine optimale Ausnutzung der natürlichen Energien bei minimaler Verweilzeit gesichert ist. Ein weiteres Ziel der vorliegenden Erfindung ist es, durch einen einfachen Aufbau der Anlage für eine geringe Wartung und hohe Wirtschaftlichkeit zu sorgen.

Die vorstehend genannte Aufgabe wird grundsätzlich und erfindungsgemäß durch die im Anspruch 1 näher gekennzeichnete Anlage gelöst, die neben einer Vielzahl von Verdunstungselementen mit großer kugelförmiger Oberfläche eine sägeblattförmige Dachkonstruktion aufweist und zudem zur Vorwärmung des Meerwassers einen künstlichen See als Sonnenenergiespeicher aufweist.

Erfindungsgemäß ist also bei bester Raumausnutzung eine maximale Verdunstungsfläche durch die besondere kugelförmige Ausgestaltung der Verdunstungselemente geschaffen. worden, so daß ein hohes Verdunstungsausmaß erzielt wird. Gleichzeitig wird die effektive Ausnutzung der Sonnenenergie dadurch erreicht, daß nicht eine x-beliebige Dachkonstruktion, sondern eine mit sägeblattförmiger Konfiguration gewählt wird, die vorteilhafterweise einen Öffnungswinkel von etwa 60° aufweist und insbesondere aus transparentem Kunststoff besteht und außerdem bezüglich ihrer Längsrichtung in Himmelsrichtung ost-west-orientiert ist und so die Sonnenstrahlen aus verschiedenen Einstrahlungswinkeln kontinuierlich den ganzen Tag über optimal auffängt. Der erfindungsgemäß mit der Anlage verbundene künstliche See als Sonnenenergiespeicher ermöglicht, daß das Meerwasser mit Temperatur von etwa knapp unter 100° C in die Verdunstungseinheiten eingespeist werden kann, so daß insgesamt eine höhere Verdunstungsrate möglicht ist. Ferner wird der Verdunstungsprozeß auch noch durch die Ventilatoren beschleunigt, die die heiße Luft in die Verdunstungssegmente einleiten und auch den Wasserdampf in die Kondensationseinheiten weiterführen.

Weitere Vorteile und Merkmale, die ebenfalls von erfindungswesentlicher Bedeutung sein können, gehen aus den vorstehenden Unteransprüchen hervor.

Im folgenden werden zwei Ausführungsbeispiele im Zusammenhang mit den Zeichnungen beschrieben, die dem besseren Verständnis der Erfindung dienen sollen. Es zeigt:

Fig. 1    eine schematische Skizze einer erfindungsgemäßen Entsalzungsanlage in der Draufsicht,

Fig. 2    eine Querschnittsansicht der in Fig. 1 gezeigten Anlage,

Fig. 3    eine schematische Skizze in Form einer Draufsicht auf eine zweite Ausführungsform der erfindungsgemäßen Entsalzungsanlage,

Fig. 4    eine schematische Querschnittsansicht durch eine erfindungsgemäß eingesetzte Verdunstungseinheit,

Fig. 5    eine perspektivische Teildarstellung des künstlichen Sees, und

Fig. 6    eine perspektivische Darstellung der Pyramidenreflektoren.

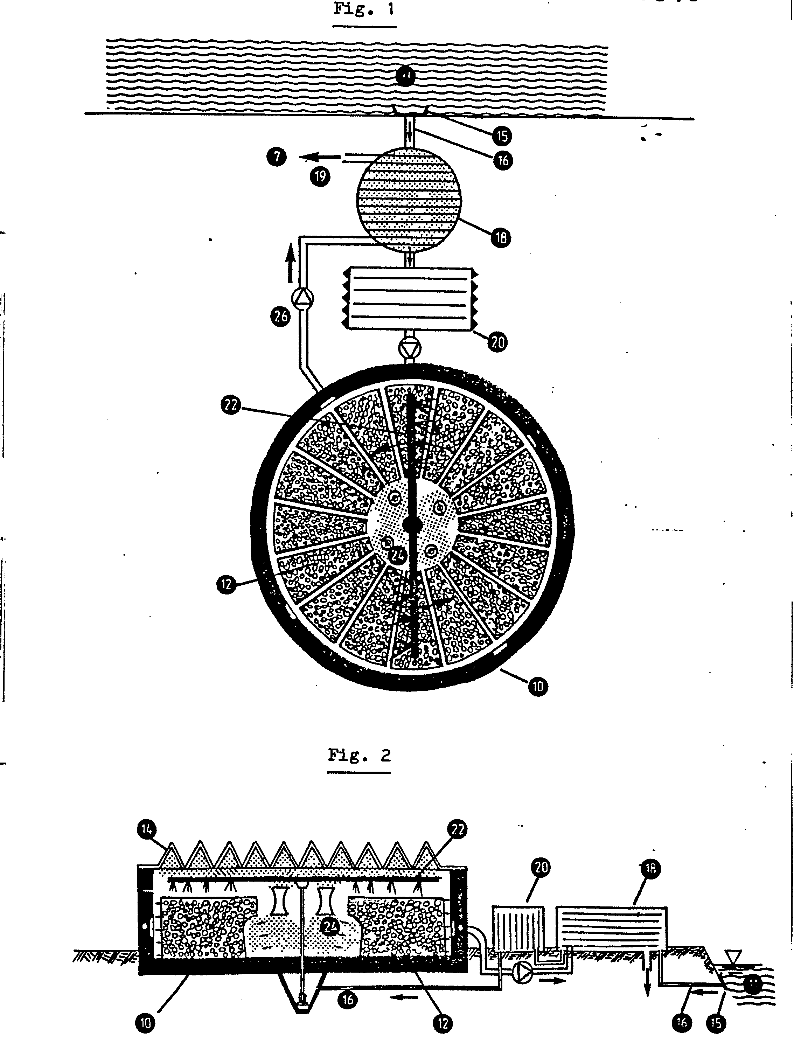

Das erste Ausführungsbeispiel der Erfindung ist in den Fig. 1 und 2 dargestellt, und zeigt eine erfindungsgemäße Entsalzungsanlage, die allgemein mit 100 bezeichnet ist. Im vorliegenden Fall ist die Verdunstungseinheit 10 in zylindrischer Form ausgebildet, in der eine Vielzahl von Verdunstungselementen 12 angeordnet sind. Ursprünglich wurde daran gedacht, Schlacke, Blähton, Kügelchen oder ähnliches Material einzusetzen, um so die Verdunstungsfläche beträchtlich zu vergrößern. Die Verdunstungseinheit 10 kann beispielsweise bei einem Durchmesser von 15 m 1,5m hoch sein und in einzelne Segmente aufgeteilt werden. Der weitere Aufbau der Verdunstungseinheit 10 wird noch weiter unten im Hinblick auf Fig. 2 näher erläutert. Über einen Einlauf 15 und eine Zulaufleitung 16 wird Meerwasser direkt in eine

Kondensationseinheiten 18 eingeführt, die wiederum direkt in Verbindung steht mit dem künstlichen Teich 20, der ursprünglich als Solaraufheizung bezeichnet war und seinerseits mit der Verdunstungseinheit 10 verbunden ist. Ferner geht aus Fig. 1 hervor, wie das aus der Verdunstungseinheit 10 über den Verdichter 26 abgezogene Wasserdampf-Luft-Gemisch der Kondensationseinheit 18 zugeführt wird, wo es dann letztlich über die Leitung 19 nach Kondensation als Süßwasser 7 abgezogen wird.

Aus Fig. 2 ist die sägeblattförmige Dachkonstruktion 14 für die Verdunstungseinheit 10 ersichtlich, die so aufgestellt ist, daß sie zu jeder Tageszeit möglichst viel Sonnenenergie absorbiert. Bei einer Außentemperatur von ca. 30° C wird so das Wasser auf knapp unter 100°C erwärmt. Der Drehsprenger bzw. Zerstäuber 22 sorgt dabei für eine permanente Befeuchtung der innerhalb der Verdunstungseinheiten 10 angeordneten Verdunstungselemente 12. Die Luft in der Verdunstungseinheit 10 kann dabei eine Temperatur von ca. 85° C erreichen. Die Ventilatoren 24 bewirken eine Luftumwälzung von ca. 50 000 m³/h, in Abhängigkeit von der Sollvorwärmtemperatur und der erwünschten Trinkwassermenge. Das Wasserdampf-Luft-Gemisch wird dann - wie schon erwähnt - über den Verdichter 26 in die Kondensationseinheit 18 abgesaugt, wo er kondensiert. Für den Antrieb der gezeigten und nicht gezeigten Verdichter 26 und Ventilatoren 24 wird eine nicht gezeigte Windkraftmaschine verwendet. Überschüssige Windenergie kann gespeichert werden und dient nachts der Erwärmung des Sprengwassers, so daß auch im 24-Stunden-Betrieb gearbeitet werden kann. Bei den gegebenen Abmessungen können in Abhängigkeit von der Sonneneinstrahlung stündlich etwa 3000 l Süßwasser erzeugt werden.

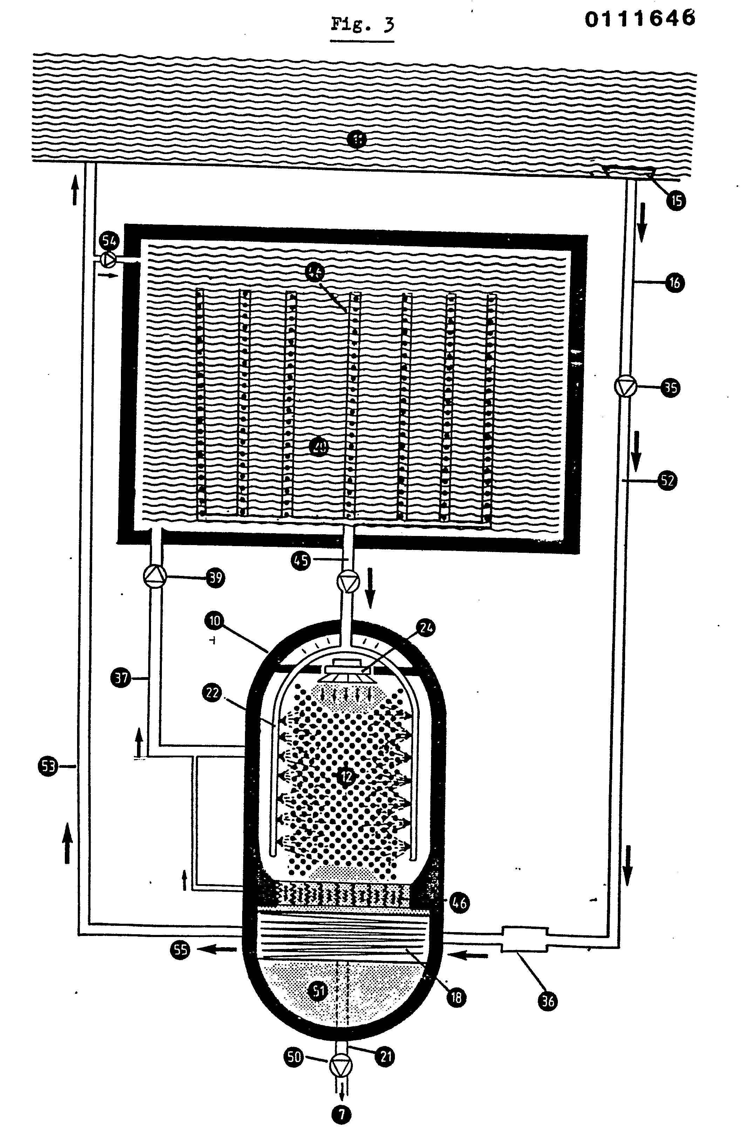

In Fig. 3 wird ein zweites, noch weiter durchkonzipiertes Ausführungsbeispiel einer erfindungsgemäßen Entsalzungsanlage gezeigt, die allgemein mit 200 bezeichnet ist. Auch hier wird wiederum Meerwasser 11 über einen Einlauf 15 und eine Zulaufleitung 16, in der eine Pumpe 35 in den — nach dem Wärmeaustausch-Prinzip — das heiße Wasserdampf-Luftgemisch kondensiert. Das daraus entstehende Süß- bzw. Trinkwasser 7 wird dann durch die Pumpe 50 abgezogen, während andererseits die abgetrennte Luft 51 mit einer Temperatur von ca. 60° C in dem Kreislauf geführt wird. Das Kühlungswasser 52 mit einer Durchlaufgeschwindigkeit von ca. 60 · 10³ m³/h erwärmt sich dabei von 15° C auf ca. 45° C. Das Wasser 55 wird zum Teil durch die Abflußrohre 53 ausge-schieden. Durch die Zulaufsleitung 54 werden ca. 3.000 l/h des erwärmten Wassers 55 in den künstlichen See eingeleitet. Der künstliche See 20 mit einer Grundfläche von 70 m² und einer Tiefe von 3m fungiert als Sonnenenergiespeicher und und ist mit einem schwarzen Boden versehen.

Das zur Verdunstung notwendige Wasser 45 wird durch den auf dem Seeboden liegenden Absaugrohren 46 direkt aus dem See entnommen und in die Verdunstungseinheit 10 weitergeleitet. Dort gelangt es mit einer Durchlaufgeschwindigkeit von ca. 60·10³ m³/h und einer Temperatur von knapp unter 100° C in der Zerstäubungsanlage 22 und wird als dünner Film über den kugelförmigen Verdunstungselemente 12 zerstäubt. Derartige Zerstäubungsanlagen sind im Stand der Technik bekannt. Es ist jedoch wichtig, eine möglichst feine und gleichmäßige Verteilung des erwärmten Wassers zu erreichen, was durch die besondere Form und Anordnung der Verdunstungselemente 12 gewährleistet wird. Durch den Verdichter 24 mit einer Lei-stung von 8 KWh wird warme Luft mit einer Geschwindigkeit von ca. 50·10³ m³/h und einer Temperatur von ca. 85° C aus dem Kollektorraum 27 in den Verdunstungsraum geführt. Dort entsteht ein Wasserdampf-Luftgemisch, das zunächst durch den Tropfenabscheider 46 durchläuft bevor es in die Kondensatinseinheit 18 gelangt. Nach dem Kondensationsvorgang hat die mitgeführte Luft eine Ausgangstemperatur von ca. 60° C und wird durch Sog des Verdichters 24 erneut in den Kollektorraum 27 eingeleitet und auf ca. 85° C erwärmt.

Von dem $60 \cdot 10^3$ l/h des zerstäubten Meerwassers verdunsten ca. $3 \cdot 10^3$ l/h. Die zurückbleibenden $57 \cdot 10^3$ l/h Sole werden durch die Pumpe 39 mit einer Leistung von 4 KWh zum künstlichen See geführt und dort in ca. 2,8 m Tiefe auslaufen.

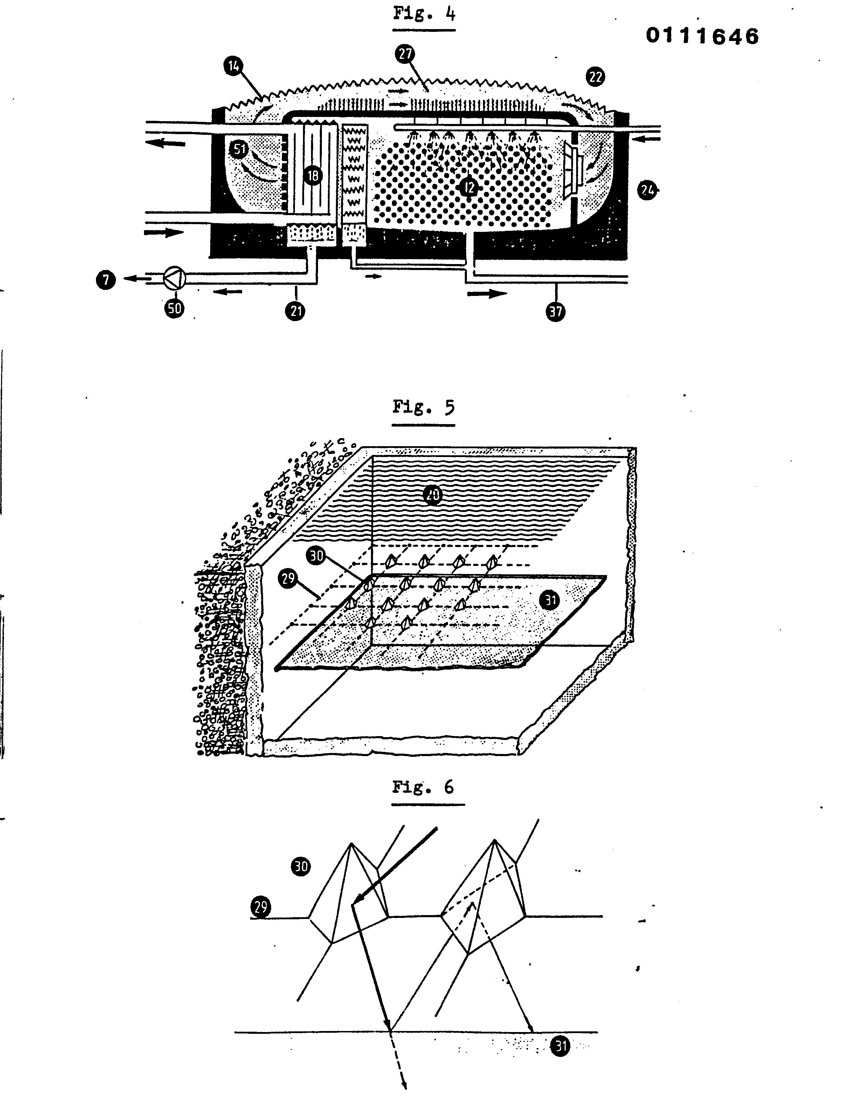

Von besonderer erfindungsgemäßer Bedeutung sind jedoch die sog. Verdunstungselemente 12, die als kugelförmige Körper in etwa gleichmäßigem Abstand voneinander innerhalb der Verdunstungseinheiten 10 angeordnet sind. Auf diese Art und Weise wird eine besonders große Verdunstungsfläche in einem relativ kleinen Raum und eine vergleichsweise optimale Verweilzeit des zu verdunstenen Wassers erzielt (vgl. Fig. 4). Die kugelförmigen Verdunstungselemente 12 sind dort kettenförmig miteinander verbunden und an einer Befestigungsvorrichtung unterhalb der Zerstäubungsvorrichtung 22 aufgehängt. Deutlich ist aus Fig. 4 die sägeblattförmige Struktur des Sonnenkollektors 14 ersichtlich, bei dem es sich um transparenten Kunststoff handelt. Es entsteht auf diese Art und Weise im oberen Teil der Verdunstungseinheit 10 ein Heißluftbereich 27. Die Heißluft wird dann über den Verdichter 24 angesaugt und in Längsrichtung durch die Verdunstungseinheit geblasen.

Nach einem weiteren Aspekt der vorliegenden Erfindung wird der künstliche See 20 in etwa 1,5 m Tiefe mit einem Gitter 29 versehen, in dessen Knoten Pyramidenreflektoren 30 angeordnet sind, um die Wärmeabsorption weiter zu steigern. In etwa 2,0 m Tiefe wird eine transparente Kunststoffolie aufgespannt. Dadurch wird die obere salzarme Wasserschicht von der unteren salzreichen Wasserschicht voneinander getrennt und eine Vermischung durch eintretenden Strömungen vermieden.

**RAFFAY, FLECK & PARTNER**
P A T E N T A N W Ä L T E
EUROPEAN PATENT ATTORNEYS

POSTFACH 32 32 17
D-2000 HAMBURG 13

DIPL.-ING. VINCENZ v. RAFFAY
DIPL.-CHEM. DR. THOMAS FLECK
HAMBURG

DIPL.-CHEM. DR. HANS D. BOETERS
DIPL.-ING. ROBERT BAUER
MÜNCHEN

KANZLEI:
GEFFCKENSTRASSE 6
TELEFON: (040) 47 80 23
TELEGRAMME: PATFAY, HAMBURG
TELEX 2 164 631 paty d

0111646

20. September 1983

Dipl.-Math. Joaquim de Tavares

Horner Weg 33

2000 Hamburg 26

UNSERE AKTE: 2495/10

Entsalzungsanlage für Meerwasser und dergleichen.

Patentansprüche

1. Entsalzungsanlage für Meerwasser und dergleichen zur Erzeugung von Wasser zum Trinken oder künstlichem Bewässern unter Ausnutzung von Sonnenenergie mit einer oder mehreren Verdampfungs- bzw. Verdunstungseinheiten, die Zerstäuber für das vorgewärmte Meerwasser aufweisen und mit einem oder mehreren Ventilatoren versehen sind, wobei ein oder mehrere mit den Verdunstungseinheiten verbundene Kondensationseinheiten vorgesehen sind, und bei der Pumpen für den Transport des Wassers sorgen, gekennzeichnet durch:

a) eine Vielzahl von Verdunstungselementen (12) mit möglichst großer kugelförmiger Oberfläche, die in den Verdunstungseinheiten (10) angeordnet sind;

b) eine sägeblattförmige Dachkonstruktion (14) für die Verdunstungseinheit(en);

c) einen künstlichen See als Sonnenenergiespeicher (20),
   der mit den Verdunstungseinheiten verbunden ist
   und zur Vorwärmung des Meerwassers dient.

2.     Entsalzungsanlage nach Anspruch 1, dadurch gekennzeichnet, daß zur Stromerzeugung, insbesondere für den
Betrieb der Pumpen und Ventilatoren, eine Windkraftmaschine vorgesehen ist.

3.     Entsalzungsanlage nach Anspruch 1, dadurch gekennzeichnet, daß die sägeblattförmige Dachkonstruktion
Öffnungswinkel von etwa 60° aufweist und insbesondere aus
transparentem Kunststoff besteht, und daß die Dachkonstruktion
in Längsrichtung ost-west-orientiert ist.

4.     Entsalzungsanlage nach Anspruch 1, dadurch gekennzeichnet, daß drei im Betrieb parallel oder in Reihe
schaltbare Verdunstungseinheiten vorgesehen sind.

5.     Entsalzungsanlage nach Anspruch 1, dadurch gekennzeichnet, daß die Verdunstungseinheiten jeweils in
einen Heißluft- und Verdunstungsbereich (27 bzw. 28) aufgeteilt sind.

6.     Entsalzungsanlage nach Anspruch 1, dadurch gekennzeichnet, daß die Verdunstungselemente (12) aus voneinander
beabstandeten Kugeln gebildet sind, und insbesondere kettenförmig und/oder in Form eines Raumgitters miteinander
verbunden sind.

7.     Entsalzungsanlage nach Anspruch 6, dadurch gekennzeichnet, daß die Kugeln aus Ton oder Keramik mit einer
schwarz glasierten Oberfläche bestehen und bei einem Durchmesser von etwa 10 cm jeweils einen Abstand von etwa 10 cm
aufweisen.

8.     Entsalzungsanlage nach Anspruch 1, dadurch gekennzeichnet, daß die Verdunstungseinheiten 10) über ein
Auffangbecken (8) für das abgezogene Salzkonzentrat-Wasser
mit dem künstlichen See (20) verbunden sind, der eine
durchlässige Trennwand (29) aufweist.

9.     Entsalzungsanlage nach Anspruch 1, dadurch gekennzeichnet, daß unter der Wasseroberfläche des künstlichen Sees eine transparente
Kunststoffolie und ein Gitter vorgesehen wird, in dessen Knoten Pyramidenreflektoren (30) befestigt sind.

10. Entsalzungsanlage nach Anspruch 1, dadurch gekennzeichnet, daß die mit salzhaltigem Meerwasser gespeisten Kondensationseinheiten zur Erwärmung des Meerwassers aus parallel oder in Reihe verbundenen Kammern bestehen, durch die Rohrwindungen hindurchverlaufen, die mit den Verdunstungseinheiten in Verbindung stehen, und daß die Kondensationseinheiten über eine Rohrleitung mit den Verdunstungseinheiten verbunden sind, die zu einem möglichst langem Abschnitt durch den künstlichen See verläuft.

0111646

Fig. 1

Fig. 2

2/3

Fig. 3

0111646

5/3

Fig. 4

0111646

Fig. 5

Fig. 6

Europäisches
Patentamt

EUROPÄISCHER RECHERCHENBERICHT

**0111646**
Nummer der Anmeldung

EP 83 10 9370

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | BEDRIJF EN TECHNIEK, Band 21, Nr. 520, 16. August 1966, AMSTERDAM (NL) J.W. BLOEMER et al.: "Destillatie van zeewater met behulp van zonne-energie is vooral in dun bevolkte gebieden rendabel", Seiten 1205-1208 * Seiten 1205-1208 * | 1,3-10 | C 02 F 1/14 C 02 F 1/04 |
| | --- | | |
| Y | US-A-4 077 849 (K.F. ZIEHM, Jr.) * das ganze Dokument * | 1,6 | |
| | --- | | |
| A | US-A-3 801 474 (N.T. CASTELLUCCI et al.) * das ganze Dokument * | 1,6,7 | |
| | --- | | RECHERCHIERTE SACHGEBIETE (Int. Cl. ³) |
| A | US-A-3 077 190 (P.S. ALLEN et al.) * das ganze Dokument * | 1,8-10 | C 02 F |
| | --- | | |
| A | US-A-3 846 251 (H.R. HAY) * das ganze Dokument * | 1,6,7 | |
| | --- | | |
| A | GB-A-1 412 971 (T.L. JACKSON) * das ganze Dokument * | 1,6,7 | |
| | --- | | |
| A | DE-A-2 847 519 (BATTELLE-INSTITUT) * das ganze Dokument * | 1,2,4 | |
| | --- -/- | | |

Der vorliegende Recherchenbericht wurde für alle Patentansprüche erstellt.

| Recherchenort DEN HAAG | Abschlußdatum der Recherche 09-03-1984 | Prüfer VAN AKOLEYEN H.T.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-1 143 569 (N. PUGET) <br> * das ganze Dokument * | 1,2 | |
| A | US-A-4 172 767 (W.E. SEAR) <br> * das ganze Dokument * | 1,2 | |
| A | US-A-4 230 531 (P.D. FERNANDOPULLE) <br> * das ganze Dokument * | 1,2 | |
| A | DE-A-2 650 482 (R. HOCK) <br> * das ganze Dokument * | 1-4 | |

RECHERCHIERTE
SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 09-03-1984 | VAN AKOLEYEN H.T.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82